# EUROPEAN PATENT SPECIFICATION

(11) **EP 1 145 349 B1**
(45) Date of publication and mention of the grant of the patent: **09.04.2003**
(21) Application number: 00900702.2
(22) Date of filing: 19.01.2000
(51) Int. Cl.: H01M 8/18

(54) **METHOD OF CARRYING OUT ELECTROCHEMICAL REACTIONS WITH AN ELECTROCATALYST**
VERFAHREN ZUR DURCHFÜHRUNG ELEKTROCHEMISCHER REAKTIONEN MIT EINEM ELEKTROKATALYSATOR
PROCEDE DE MISE EN OEUVRE DE REACTIONS ELECTROCHIMIQUES

(30) Priority: 20.01.1999 GB 9901235
(43) Date of publication of application: 17.10.2001
(73) Proprietor: Regenesys Technologies Limited, Swindon, Wiltshire SN5 6PB (GB)
(72) Inventor: COOLEY, Graham Edward, Nr Faringdon Oxon SN7 7PE (GB); MALE, Stewart Ernest, West Sussex RH19 3QG (GB); MITCHELL, Philip John, Leicestershine LE1 13SF (GB); WHYTE, Ian, Pontypridd Mid Glamorgan CS38 1YY (GB)
(74) Representative: Allard, Susan Joyce
(86) International application number: GB0000128
(87) International publication number: WO00044058

(56) References cited:
- EP-A- 0 518 407
- DE-A- 4 119 839

## Description

The present invention relates to a method of carrying out an electrochemical reaction in which catalytic components are used to enhance the electrochemical reaction.

In carrying out electrochemical reactions the catalysis of the reactions is generally achieved by applying one or more catalytic components directly onto the surface of the electrode at which the reaction occurs. The electrical current is then transferred to the electrolyte from the electrode via the catalyst. Electrochemical reactions which are generally carried out in the presence of electrocatalytic materials include the evolution of gaseous chlorine which uses ruthenium oxide as an electrocatalyst and the evolution of gaseous oxygen and hydrogen which both use platinum as an electrocatalyst.

It has been found that the effectiveness of the electrocatalyst is generally improved if it is used in finely divided or colloidal form. Thus, EP-0637851 discloses a solid polymer type fuel cell which uses an electrode in which the reaction area is increased by uniformly dispersing and bonding a solid polymer electrolyte and catalyst thereto. The electrode is formed by coating on one side of a gas-diffusible layer a mixed dispersion of a noble metal catalyst, a fine carbon powder and a colloidal dispersion of a solid polymer electrolyte. US-A-5334292 discloses electrodes for hydrogen oxidation and oxygen reduction which comprise polypyrrole films containing nano-dispersed catalytic particles. The films are prepared by including a colloidal suspension of the catalytic particles in a solution containing the polymer precursor and forming the electronically conductive polymer film therefrom.

In the prior art the electrocatalyst forms part of the structure of one of the electrodes of the electrochemical cells. Although the electrocatalyst is available to the electrolyte to promote the electrochemical reaction, the utilization of the catalyst is limited by its essentially two dimensional nature. This presents a particular problem when the concentration of the electroactive species during the reaction is reduced to such a value that mass transport to the electrode surface at which the reaction occurs becomes current limiting.

We have now developed a method of carrying out electrochemical reactions in which catalytic components are used to enhance the electrochemical reaction wherein the effective catalytic surface area is increased by dispersing the catalyst in colloidal form throughout the electrolyte.

Accordingly, the present invention provides a method according to claim 1 of carrying out an electrochemical reaction which comprises the sulfide/polysulfide redox reaction in a single cell or an array of repeating cell structures each cell with a positive chamber containing a positive electrode and an electrolyte and a negative chamber containing a negative electrode and an electrolyte, the chambers being separated one from another by an ion exchange membrane, which method comprises including in suspension in the electrolyte in the positive chamber and/or in the electrolyte in the negative chamber an electrocatalyst for the electrochemical reaction, the electrocatalyst having a particle size of up to 1 micrometre in diameter.

In carrying out the method of the present invention the electrolytes preferably circulate through the positive and negative chambers of the electrochemical cell or cell array. The cell or cell array may be of any suitable flow cell design.

The electrolyte in the positive chamber and/or the negative chamber of the cell or cell array includes therein the electrocatalyst for the reaction at the positive or negative electrode, respectively. The electrocatalyst is insoluble in the electrolyte and has a particle size of up to 1 micrometre. Preferably the electrocatalyst is in the form of a colloid, which is formed *in situ* as a suspension in the electrolyte, for example by the reaction of suitable reagents with the electrolyte.

The choice of the electrocatalyst will depend upon the reaction which is being carried out in the electrochemical cell or cell array and the nature of the electrolyte, since not only must the electrocatalyst catalyse the reaction which occurs at the positive or the negative electrode, but it must also be insoluble or at least substantially insoluble in the electrolyte in which it is suspended.

Examples of suitable electrocatalysts for electrochemical reactions include copper, nickel, iron, cobalt or molybdenum or salts of copper, nickel, iron, cobalt or molybdenum which are insoluble in the electrolyte.

The electrocatalyst will be included in the electrolyte in an amount which is sufficient to provide a catalytic effect upon the reaction. It will be understood that the amount of the electrocatalyst required will depend upon the nature of the catalyst and the nature of the electrochemical reaction which is being catalysed. Amounts in the parts per million by weight range may be effective, for example amounts of from 50 to 1000 ppm by weight, preferably above 200 ppm by weight of the electrocatalyst based upon the electrolyte volume may be used, i.e. from 50 to 1000 mg of electrocatalyst per litre of electrolyte.

In a preferred aspect of the present invention the chamber which contains the electrolyte having the electrocatalyst suspended therein contains a flow through separator which separates the electrode of the chamber and the membrane. The flow through separator acts to promote turbulence within the chamber and thus increases the contact of the electrocatalytic particles with the electrode. The flow through separator preferably has a large void volume to allow the electrolyte to flow through without a drop in pressure within the separator. An example of a suitable separator material which is non-conductive is a mesh of a polymeric material, for example a high density polyethylene mesh. It is particularly preferred that the separator is conductive when it also acts as a current collector, thereby facilitating the passage of current to and from the catalytic particles to the electrode. In this embodiment, the electrocatalyst and the flow separator act as a three dimensional electrode. Examples of conductive separator materials include; a reticulated vitreous carbon structure, carbon in the form of a felt, the fibres of which preferably have a diameter of about 10 micrometres, a mesh of a polymeric material, for example a high density polyethylene mesh, with carbon black dispersed therein, or a metallic foam or mesh.

The electrochemical reaction carried out in accordance with the method of the invention is preferably an electrochemical process for energy storage and/or power delivery. The electrolyte in the negative chamber of the electrochemical cell or cells preferably contains a sulfide, whilst the electrolyte in the positive chamber of the electrochemical cell or cells preferably contains bromine, iron, air or oxygen.

The chemical reactions which are involved in these three systems are as follows:

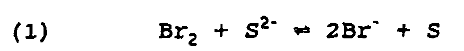

The above reaction actually occurs in separate but dependent bromine and sulfur reactions, the bromine reaction taking place at the positive electrode and the sulfur reaction at the negative electrode.

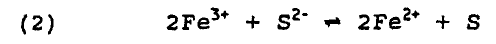

Once again, this reaction actually occurs in separate but dependent iron and sulfur reactions, the iron reaction taking place at the positive electrode and the sulfur reaction at the negative electrode.

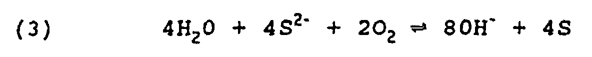

This reaction also actually occurs in separate but dependent oxygen and sulfur reactions, the oxygen reaction taking place at the positive electrode membrane and the sulfur reaction at the negative electrode.

Suitable electrocatalysts for the sulfide/poly-sulfide redox reduction reaction include sulfides of Cu, Ni, Mo, Fe, Co. For example, CuS may be formed as a precipitate in an electrolyte for the sulfide/poly-sulfide reduction reaction, such as Na₂S₄, by adding precipitated copper powder or a solution of copper sulphate to the electrolyte.

The present invention will be further described with reference to the following Examples.

### EXAMPLE 1

A small flow through electrochemical cell was constructed containing two composite electrodes, each with an electrode area of 176cm², formed from a mixture of 50% by weight graphite and 50% Kynar 6000LD polyvinylidene fluoride (Elf Atochem) moulded at a temperature of 210°C and a pressure of 4.5 MPa. The two electrodes were separated by a Nafion 115 membrane (DuPont) with an electrode gap of 3mm. The electrode/membrane separation was 1.5mm on each side of the cell.

The electrolyte circulating through the negative compartment of the cell was 1.3M Na₂S_{3.7}, 1M NaOH and 1M NaBr. The electrolyte circulating through the positive compartment of the cell was 5M NaBr. The electrolytes were pumped around the circuits and flowed past the respective electrodes at a linear flow rate of 5 cm s⁻¹. The gap between the electrodes and the membrane was filled with a reticulated vitreous carbon (RVC) structure. The RVC structure on each side of the cell filled the electrolyte channels and contacted both the electrode and the membrane. The RVC structure acted as a turbulence promoter, support and three-dimensional electrode.

The current was set to 6A (34 MA cm⁻²) and the cell voltage recorded with time. The potentials of the electrodes on the negative side of the cell and the positive side of the cell were monitored via platinum reference electrodes. The initial voltage of the cell was 2.15V, with overpotential contributions of 0.075V from the electrode potential of the electrode in the positive compartment of the cell and -0.65V from the electrode in the negative compartment of the cell.

After operating the cell for 12 minutes, 30mg of precipitated copper powder was added to the electrolyte circulating through the negative compartment of the cell (90ppm). On contact with the electrolyte a black copper sulfide suspension was formed. The electrolyte containing the copper sulfide suspension was pumped through the negative compartment of the cell and the cell voltage was seen to drop to 2.03V, with a corresponding drop in the overpotential of the electrode in the negative compartment of the cell to - 0.55V, i.e. both showing a drop in potential of 0.1V.

The potential stabilized at 2.03V and after a further 3 minutes (15 minutes in total charge) a further 70mg of precipitated copper powder (212ppm) was added to the electrolyte circulating through the negative compartment of the cell. The cell voltage dropped to 1.74V, with a corresponding drop in the overpotential on the negative electrode to -0.18V. It can be seen that the addition of copper to the polysulphide electrolyte catalysed the charge reaction, resulting in a decrease in cell voltage from 2.15 to 1.74V, which was accompanied by a decrease in the overpotential on the negative electrode of from -0.65 to -0.18V. The voltage efficiency of the cell increased from 57% to 71% by the addition of the copper powder to the electrolyte circulating through the negative chamber of the cell.

### EXAMPLE 2

A large flow through electrochemical cell was constructed containing nine composite bipolar electrodes, each side with an electrode area of 1064cm², prepared according to the conditions of Example 1. The end electrodes were formed from identical materials. The electrodes were separated from one another by Nafion 115 members (Du Pont) with an electrode gap of 3mm. The electrode/membrane separation in each compartment was 1.5mm. The electrolyte channels were filled with a 1.3mm thick high density polyethylene mash which acted as a membrane support and turbulence promoter.

The electrolytes were as described in Example 1 and were circulated through the circuits of the cell flowing past each electrode at a linear flow rate of 5cm s⁻¹. The current was set to 36A (34mA cm⁻²) and the cell voltage recorded with time.

The initial cell voltage was 24.2V, i.e. an average cell voltage of 2.42V. A full charge/discharge cycle was run for the system. The charging voltage was 23.6V and the discharge was at 11.04V at half charge, resulting in a voltage efficiency of 47%.

The current was switched off and the electrolytes allowed to pump around the cell. A solution of copper sulphate at a concentration equivalent to 50ppm Cu²⁺ was added to the electrolyte circulating through the negative chambers of the stack of cells. A black suspension of copper sulfide was formed. A current of 36A was applied as before and the cell voltage dropped from 24.2 to 18.3V after 1 minute.

The addition of copper sulphate caused the cell voltage to drop from 24.2 to 18.3V, resulting in a single cell voltage drop of 2.42 to 1.83V. The voltage efficiency increased from 47% to 67%.

### EXAMPLE 3

A rotating disc electrode comprising a platinum rod of 6mm diameter polished flat and sheathed in PTFE (total diameter 18mm) was employed as an inert electrode. This electrode was immersed in a solution of 1M sodium polysulphide (as Na₂S₃) and rotated at a speed of 10 rpm in order to maintain constant hydrodynamic conditions. A silver/silver sulphide electrode was used to provide a stable reference potential.

The platinum electrode was allowed to establish its open circuit equilibrium potential before being polarised cathodically at a series of increasing current densities whilst recording the resulting potential. Each current density was imposed for a period of 900 seconds allowing sufficient time for an accurate determination of potential.

Initial open circuit potential was recorded as approximately 120mV versus Ag/AgS. Subsequent potentials were seen to increase in the negative direction with increasing current density and typically exhibiting a potential of -380mV for an imposed current density of 60 mA/cm², representing a total overpotential of 500mV.

After duplicating this experiment to ensure consistency of data, the procedure was repeated following a single addition of copper sulphate solution containing copper at 400ppm.

The copper sulphate solution was pipetted dropwise into the polysulphide solution, whilst continually rotating the electrode and thereby inducing a stirring action. On contact of the two solutions the local reaction region was seen to immediately turn black, as copper sulphide was formed, but rapidly disappearing as it was dispersed into the bulk solution. No residual black colour could be detected in solution, suspension or as precipitate suggesting that the resultant copper sulphide existed as extremely small particles.

Again the open circuit potential was recorded as approximately 120mV and a series of negative potentials were noted with increasing current density. In this experiment the potential recorded at each current density was significantly less than that established in the absence of the copper sulphate addition. The magnitude of this effect is illustrated by the fact that the potential recorded at a current density of 60mA was -80mV, representing an overpotential of 200mV compared to the overpotential of 500mV in the absence of copper sulphate.

This effect illustrates the dramatic reduction in the energy needed to maintain a given electrochemical reaction rate when copper is added to polysulphide solution in appropriate form.

The comparative results are tabulated below:

| Current Density mA/cm² | Total Overpotential without CuSO₄ mV | Total Overpotential with CuSO₄ mV |
|---|---|---|
| 5 | 320 | 25 |
| 10 | 370 | 35 |
| 20 | 410 | 60 |
| 40 | 440 | 140 |
| 60 | 500 | 200 |

## Claims

1. A method of carrying out an electrochemical reaction which comprises the sulfide/polysulfide redox reaction in a single cell or an array of repeating cell structures each cell with a positive chamber containing a positive electrode and an electrolyte and a negative chamber containing a negative electrode and an electrolyte, the chambers being separated one from another by an ion exchange membrane, which method comprises including in suspension in the electrolyte in the positive chamber and/or in the electrolyte in the negative chamber an electrocatalyst for the electrochemical reaction, the electrocatalyst having a particle size of up to 1 micrometre in diameter.

2. A method as claimed in claim 1 wherein the electrolytes circulate through the positive and the negative chambers of the electrochemical cell or cell array.

3. A method as claimed in claim 1 or claim 2 wherein the electrocatalyst for the electrochemical reaction comprises copper, nickel, iron, cobalt or molybdenum or a salt of copper, nickel, iron, cobalt or molybdenum which is insoluble in the electrolyte.

4. A method as claimed in any one of the preceding claims wherein the electrocatalyst is formed in situ as a suspension in the electrolyte.

5. A method as claimed in any one of claims 2 to 4 wherein the chamber which contains the electrolyte which includes the electrocatalyst for the reaction contains a flow through separator which separates the electrode of the chamber and the membrane.

6. A method as claimed in claim 5 wherein the separator acts as a turbulence promoter.

7. A method as claimed in claim 5 or claim 6 wherein the separator acts as a current collector.

8. A method as claimed in claim 5 or claim 6 wherein the separator comprises a reticulated vitreous carbon structure, or a polymer mesh.

9. A method as claimed in any one of the preceding claims wherein the electrochemical reaction is a process for electrochemical energy storage.

10. A method as claimed in any one of the preceding claims wherein the electrocatalyst for the electrochemical reaction comprises one or more sulfides of copper, nickel, iron, cobalt or molybdenum.

## Patentansprüche

1. Verfahren zum Ausführen einer elektrochemischen Reaktion, das die Sulfid/Polysulfid-Redox-Reaktion in einer einzelnen Zelle oder einer Gruppe von sich wiederholenden Zellenstrukturen aufweist, wobei jede Zelle mit einer positiven Kammer eine positive Elektrode und einen Elektrolyt enthält und einer negativen Kammer eine negative Elektrode und einen Elektrolyt enthält, wobei die Kammern voneinander durch eine Ionen-Austausch-Membran getrennt sind, welches Verfahren es aufweist, in Suspension im Elektrolyt in der positiven Kammer und/oder im Elektrolyt in der negativen Kammer einen Elektrokatalysator für die elektrochemische Reaktion beizufügen, wobei der Elektrokatalysator eine Teilchengröße von bis zu einem 1 Mikrometer Durchmesser hat.

2. Verfahren nach Anspruch 1, bei dem die Elektrolyten durch die positiven und die negativen Kammern der elektrochemischen Zelle oder Zellengruppe zirkulieren.

3. Verfahren nach Anspruch 1 oder 2, bei dem der Elektrokatalysator für die elektrochemische Reaktion Kupfer, Nickel, Eisen, Kobalt oder Molybdän oder ein Salz von Kupfer, Nickel, Eisen, Kobalt oder Molybdän aufweist, das im Elektrolyten nichtlöslich ist.

4. Verfahren nach einem der vorangehenden Ansprüche, bei dem der Elektrokatalysator in Situ als eine Suspension im Elektrolyt gebildet wird.

5. Verfahren nach einem der Ansprüche 2 bis 4, bei dem die Kammer, die den Elektrolyt enthält, der den Elektrokatalysator für die Reaktion enthält, einen Durchströmseparator enthält, der die Elektrode der Kammer und die Membran trennt.

6. Verfahren nach Anspruch 5, bei dem der Separator als Turbulenzverstärker wirkt.

7. Verfahren nach Anspruch 5 oder 6, bei dem der Separator als Stromsammler wirkt.

8. Verfahren nach Anspruch 5 oder 6, bei dem der Separator eine netzartige oder vernetzte glasartige Kohlenstoffstruktur oder ein Polymergitter aufweist.

9. Verfahren nach einem der vorangehenden Ansprüche, bei dem die elektrochemische Reaktion ein Verfahren für elektrochemische Energiespeicherung ist.

10. Verfahren nach einem der vorangehenden Ansprüche, bei dem der Elektrokatalysator für die elektrochemische Reaktion ein oder mehrere Sulfide von Kupfer, Nickel, Eisen, Kobalt oder Molybdän aufweist.

## Revendications

1. Procédé de mise en oeuvre d'une réaction électrochimique, comprenant la réaction d'oxydoréduction de sulfure/polysulfure dans une cellule unique ou dans un agencement de structures comprenant des cellules répétitives, chaque cellule ayant une chambre positive contenant une électrode positive et un électrolyte et une chambre négative contenant une électrode négative et un électrolyte, les chambres étant séparées l'une de l'autre par une membrane échangeuse d'ions, ledit procédé comprenant l'inclusion en suspension, dans l'électrolyte de la chambre positive et/ou dans l'électrolyte de la chambre négative, d'un électrocatalyseur pour la réaction électrochimique, ledit électrocatalyseur ayant une taille de particules allant jusqu'à 1 micromètre de diamètre.

2. Procédé selon la revendication 1, dans lequel les électrolytes circulent à travers les chambres positive et négative de la cellule électrochimique ou de l'agencement de cellules électrochimiques.

3. Procédé selon la revendication 1 ou la revendication 2, dans lequel l'électrocatalyseur pour la réaction électrochimique comprend du cuivre, du nickel, du fer, du cobalt ou du molybdène ou un sel de cuivre, de nickel, de fer, de cobalt ou de molybdène, qui est insoluble dans l'électrolyte.

4. Procédé selon l'une quelconque des revendications précédentes, dans lequel l'électrocatalyseur est formé *in situ* sous la forme d'une suspension dans l'électrolyte.

5. Procédé selon l'une quelconque des revendications 2 à 4, dans lequel la chambre qui contient l'électrolyte qui comprend l'électrocatalyseur pour la réaction contient un séparateur d'écoulement qui sépare l'électrode de la chambre et la membrane.

6. Procédé selon la revendication 5, dans lequel le séparateur sert d'activateur de turbulence.

7. Procédé selon la revendication 5 ou la revendication 6, dans lequel le séparateur sert de collecteur de courant.

8. Procédé selon la revendication 5 ou la revendication 6, dans lequel le séparateur comprend une structure carbonée vitreuse réticulée ou un réseau polymère.

9. Procédé selon l'une quelconque des revendications précédentes, dans lequel la réaction électrochimique est un procédé de stockage électrochimique d'énergie.

10. Procédé selon l'une quelconque des revendications précédentes, dans lequel l'électrocatalyseur pour la réaction électrochimique comprend un ou plusieurs sulfures de cuivre, de nickel, de fer, de cobalt ou de molybdène.
